# EUROPEAN PATENT SPECIFICATION

(11) **EP 3 511 806 B1**
(45) Date of publication and mention of the grant of the patent: **16.03.2022**
(21) Application number: 18205376.9
(22) Date of filing: 22.05.2014
(51) Int. Cl.: G06F 3/01

(54) **METHOD AND APPARATUS FOR DISPLAYING A PICTURE ON A PORTABLE DEVICE**
VERFAHREN UND VORRICHTUNG ZUR ANZEIGE EINES BILDES AUF EINER TRAGBAREN VORRICHTUNG
PROCÉDÉ ET APPAREIL POUR AFFICHER UNE IMAGE SUR UN DISPOSITIF PORTABLE

(30) Priority: 24.05.2013 KR 20130059106; 14.08.2013 KR 20130096788
(43) Date of publication of application: 17.07.2019
(62) Divisional of application: 14169394.5
(73) Proprietor: Samsung Electronics Co., Ltd., Gyeonggi-do 16677 (KR)
(72) Inventor: Bae, Daewoong, Suwon-si, Gyeonggi-do 16677 (KR); Ko, Kwanghyun, Suwon-si, Gyeonggi-do 16677 (KR); Park, Yonghak, Suwon-si, Gyeonggi-do 16677 (KR)
(74) Representative: HGF

(56) References cited:
- EP-A1- 2 535 809
- EP-A1- 2 557 492
- US-A1- 2011 098 024
- US-A1- 2011 169 749
- US-A1- 2012 236 018

## Description

### BACKGROUND

### 1. Field of the Invention

The present invention generally relates to a method and an apparatus for displaying pictures on portable devices, and more particularly, to a method and an apparatus for displaying pictures on portable devices, which enable a user to manipulate the portable devices using only one hand. US2011169749 discloses a system and a method allowing a mobile device with a limited amount of resources to execute applications in full and mini modes, thereby using a relatively small amount of resources and efficiently using the execution screens. EP2557492 discloses a virtual screen can be overlaid on a software screen and can further visually distinguish the virtual screen from the main screen. US2011098024 discloses a display of a mobile communication terminal shifted to an horizontal viewing position, the application for a horizontal viewing position being automatically executed without any separate key input to heighten the user's convenience.

### 2. Description of the Related Art

Thanks to the recent development of information technology, portable device are able to support various functions such as multimedia data performance, web surfing, communication, financial transactions, and the like. With such various functions supported by the portable device, users may prefer a large screen. Based on such a trend, recent portable devices tend to be enlarged.

Meanwhile, as portable devices becomes larger, it may be inconvenient to the user if the screen of portable device is so big that it is difficult for the user to grip and manipulate the portable device with only one hand. Therefore, the user may have to grip the portable device with two hands and manipulate a touch screen using two thumbs. Alternatively, the user may manipulate the touch screen with one hand while gripping the portable device with the other hand. However, the above mentioned methods require the user to use two hands. In addition, when the user is unable to use one hand, if a portable device has a big screen it can be difficult for the user to touch the end area of the screen.

### SUMMARY OF THE INVENTION

The invention is set out in the appended set of claims. The dependent claims set out particular embodiments.

It is an aim of certain embodiments of the invention to provide a method and an apparatus which enables a user to conveniently manipulate a portable device having a big screen with only one hand by providing a translucent reduced image capable of adjusting the size and location of images on the screen.

According to a first aspect of the present invention there is provided a method of displaying images on a screen of a portable device, the method comprising: entering a mini mode and displaying a reduced image, which is the same as an original image with a smaller size than that of the original image; detecting a touch input which is generated on the reduced image; and performing a function corresponding to the touch input.

According to a second aspect of the present invention there is provided an apparatus of displaying images on a screen of a portable device, the apparatus comprising: a touch panel configured to detect a touch input for performing a function in a mini mode; a display panel configured to display a reduced image, which is the same as an original image with a smaller size than that of the original image, in the mini mode on the screen; a memory configured to store setup information of the mini mode; and a control unit configured to enter the mini mode and to perform a function corresponding to the touch input.

In accordance with an embodiment of the present invention, a method of displaying images on a screen of a portable device is provided. The method includes entering a mini mode and displaying a reduced image, which is the same as an original image with a smaller size than that of the original image, in the mini mode on the screen; detecting a touch input which is generated on the reduced image; and performing a function corresponding to the touch input.

The method may further comprise detecting a preset event for requesting the mini-mode while the original image is displayed on the screen, wherein the preset event comprises at least one of a preset touch gesture for requesting the mini-mode, a preset key input for requesting the mini-mode and a preset motion for requesting the mini-mode.

Displaying the mirror image may comprise displaying outer key icons, which are variably arranged based on the location of the mirror image, on one side of the mirror image.

Displaying the mirror image may comprise displaying setup change icons, which include at least one of a size adjustment key for requesting a size adjustment mode of the mirror image, a movement key for requesting a movement mode of the mirror image, and a mini-mode deactivation key, on one side of the mirror image.

Detecting the touch input generated on the mirror image may comprise determining whether the touch input is a preset touch input for changing a setup of the mirror image, and wherein performing the function corresponding to the touch input comprises, when it is determined that the touch input is for changing the setup of the mirror image, changing the setup of the mirror image.

Changing the setup of the mirror image may comprise: detecting a touch movement which starts from a corner point of the mirror image in a direction; and adjusting a size of the mirror image according to the direction of the detected touch movement.

Changing the setup of the mirror image may comprise: determining whether a size adjustment key displayed on one side of the mirror image is selected; when it is determined that the selection of the size adjustment key is selected, displaying an image adjustment box on a border of the mirror image; and adjusting a size of the mirror image by adjusting a size of the image adjustment box.

Changing the setup of the mirror image may comprise: detecting a touch which is generated on at least one of a border of the mirror image or a movement key; performing a movement mode of the mirror image according to the detected touch; detecting a movement of the detected touch; and changing a location of the mirror image according to the movement of the detected touch.

In accordance with another embodiment of the present invention, an apparatus of displaying images on a screen of a portable device is provided. The apparatus includes a touch panel configured to detect a touch input for performing a function in a mini mode; a display panel configured to display a reduced image, which is the same as an original image with a smaller size than that of the original image, in the mini mode on the screen; a memory configured to store setup information of the mini mode; and a control unit configured to enter the mini mode and performs a function corresponding to the touch input.

The apparatus may further comprise at least one of a key input unit configured to detect a preset key input for requesting the mini-mode, a sensor unit configured to detect a preset motion for requesting a mini-mode in the portable device, and the touch panel configured to detect a preset touch gesture for requesting the mini-mode.

The display panel may be configured to display outer key icons, which are variably arrange based on the location of the mirror image displayed on the screen, on one side of the mirror image.

The display panel may be configured to display setup change icons, which include at least one of a size adjustment key for requesting a size adjustment mode of the mirror image, a movement key for requesting a movement mode of the mirror image, and a mini-mode deactivation key, on one side of the mirror image.

The control unit may be configured to detect a touch movement which starts from a corner point of the mirror image in a direction, and to adjust a size of the mirror image according to the direction of the detected touch movement.

The control unit may be configured to determine whether a size adjustment key displayed on one side of the mirror image is selected, when it is determined that the selection of the size adjustment key is selected, to display an image adjustment box on a border of the mirror image, and to adjust a size of the mirror image by adjusting a size of the image adjustment box.

The control unit may be configured to detect a touch which is generated on at least one of a border of the mirror image or a movement key, to perform a movement mode of the mirror image according to the detected touch, to detect a movement of the detected touch, and to change a location of the mirror image according to the movement of the detected touch.

Another aspect of the invention provides a computer program comprising instructions arranged, when executed, to implement a method in accordance with any one of the above-described aspects. A further aspect provides machine-readable storage storing such a program.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a block diagram of a portable device according to an embodiment of the present invention;
FIG. 2 is a flowchart illustrating a process for performing a mini mode in a portable device according to an embodiment of the present invention;
FIGs. 3A and 3B illustrate a reduced image in a mini mode according to an embodiment of the present invention;
FIG. 4A illustrates examples of touch gestures for entering a mini mode according to an embodiment of the present invention;
FIGS. 4B and 4C illustrate a motion for entering a mini mode according to an embodiment of the present invention;
FIG. 5 is a flowchart illustrating a detailed process for changing a setup of a reduced image according to an embodiment of the present invention;
FIGs. 6A and 6B illustrate a change of setup of an opaque reduced image according to an embodiment of the present invention;
FIGs. 7A and 7B illustrate a change of setup of a translucent reduced image according to an embodiment of the present invention; and
FIG. 8 illustrates performing a function in a mini mode according to an embodiment of the present invention.

### DETAILED DESCRIPTION

Hereinafter, embodiments of the present invention will be described in detail with reference to the accompanying drawings. It should be noted that the same elements will be designated by the same reference numerals although they are shown in different drawings. Further, in the following description of the present invention, a detailed description of known functions and configurations incorporated herein will be omitted when it may make the subject matter of the present invention unclear.

Meanwhile, embodiments of the present invention shown and described in this specification and the drawings correspond to specific examples presented in order to easily explain technical contents of the present invention, and to help comprehension of the present invention, but are not intended to limit the scope of the present invention.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

According to an embodiment of the present invention, a portable device may be operated in two modes of images, i.e., a full mode and a mini mode with respect to supported pictures.

The term "full mode" means a mode where an image is displayed on the full screen of the portable device. The image may be a performed image. The full mode may be referred to as a normal display mode in which the image is displayed through the whole area of the screen of the portable device. Hereinafter, the image displayed in the full mode is referred to as an original image.

The term "mini mode" denotes a mode where the original image is reduced in size to be thereby displayed on the partial area of the screen. Hereinafter, the image displayed in the mini mode is referred to as a reduced image. The reduced image may alternatively be referred to as a mirror image, though it will be understood that the term mirror image does not require that there is any inversion of the original image. The reduced image may be displayed by itself or together with the original image. When the reduced image is displayed together with the original image, the original image may be overlaid with the reduced image that is in the translucent window. Also, when displaying the reduced image without the original image, the reduced image may be displayed to be opaque or it may be displayed to be translucent. The original image may be displayed unchanged, other than being overlaid. Alternatively the original image may be altered for instance by being reduced in brightness or contrast to highlight the reduced image.

The term "overlaying" means a state in which the original image is covered or partly covered by the translucent reduced image.

The present invention enables a user to manipulate a big screen with only one hand by providing a reduced image, so that the user is able to conveniently operate the portable device.

Hereinafter, the configuration of a portable device and performance of a control method according to an embodiment of the present invention will be described in detail with reference to the accompanying drawings.

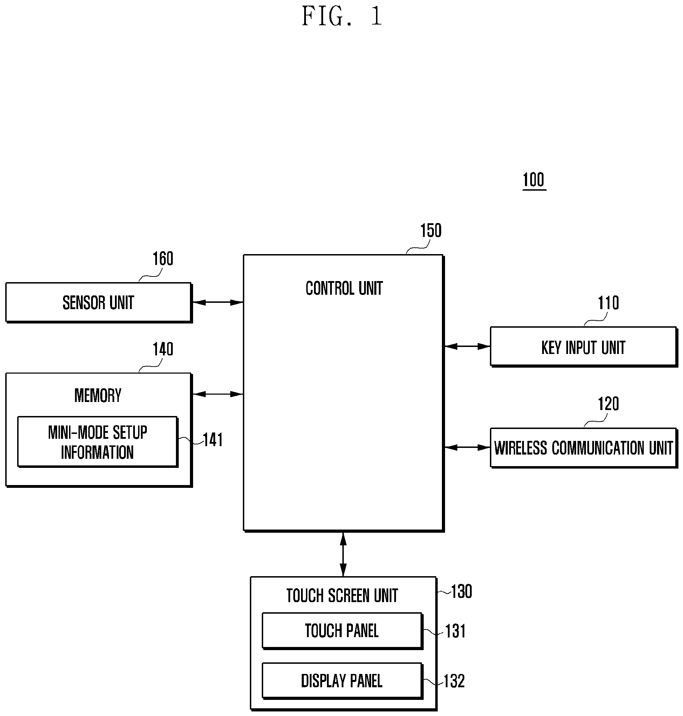

FIG. 1 is illustrates a configuration of a portable device according to an embodiment of the present invention.

Referring to FIG. 1, the portable device 100 includes a key input unit 110, a wireless communication unit 120, a touch screen unit 130, a memory 140, a control unit 150 and a sensor unit 160. The touch screen unit 130 includes a touch panel 131 and a display panel 132.

The key input unit 110 receives a key input by a user in order to control the portable device 100. When the portable device 100 provides a full touch screen, the key input unit 110 includes keys only for power on/off, volume adjustment and a back function, which are provided at one side of the portable device 100. The key input unit 110 receives a key input that is one of methods capable of entering the mini mode in accordance with an embodiment of the present invention. For example, the key input unit 110 is provided with a predetermined key (for instance, a mini mode key) for entering the mini mode and receives an input by the predetermined key. Alternatively, the key input unit 110 may receive an input by a combination of some function keys (for instance, home key + volume key) for entering the mini mode.

The wireless communication unit 120 performs a function of wireless communication of the portable device 100. The wireless communication unit 120 may include a radio frequency (RF) transmitter for modulating and amplifying the frequency of a signal to be transmitted, and a RF receiver for low-noise-amplifying a received signal and demodulating the frequency thereof. Also, the wireless communication unit 120 may include a mobile communication module, a digital broadcasting module and a near field communication module. The wireless communication unit 120 performs a function of wireless communication under the mini mode in the portable device 100.

The touch screen unit 130 includes a touch panel 131 and a display panel 132. The touch screen unit 130 may be configured to have the touch panel 131 positioned in front of the display panel 132, or to combine the panels integrally, but is not limited thereto, and may have various configurations.

The touch panel 131 is a device for detecting a touch input by the user. The touch panel 131 may be implemented with a technology of capacitive overlay, resistive overlay, infrared beam, or the like. Also, any technologies to detect a contact or pressure of an object other than the above may be applied to the touch panel 131. The touch panel 131 receives a user's touch input to thereby detect a touch point. The touch panel 131 detects the generation of a user's touch gesture for entering the mini mode and transmit the generated touch signal to a control unit 150 according to an embodiment of the present invention. The touch panel 131 also detects a user's touch input (for instance, a long touch, or a drag) for adjustment of the location and size of the reduced image. In addition, the touch panel 131 detects a touch input (for instance, a tap) for performing a predetermined function on the reduced image. The event for entering the mini mode are not limited to the key input, while the touch panel 131 may receive a touch event by the user for entry to mini mode. For example, the touch panel 131 receives a touch gesture having a path along a semi-circle from one side of the screen.

The display panel 132 may be implemented by Liquid Crystal Displays (LCDs), Organic Light Emitting Diodes (OLEDs), and Active Matrix Light Emitting Diodes (AMOLEDs). The display panel 132 provides the user with various visual information such as menus, input data and setup information of functions of the portable device 100. The display panel 132 displays an image in at least one of the full mode and the mini mode according to an embodiment of the present invention. At this time, the display panel 132 may display the original image in the full mode on the full screen, and the reduced image in the mini mode on the partial area of the screen, respectively. The reduced image may provide the same contents as those in the original image. Also, under the mini mode, the display panel 132 displays outer keys such as a volume key, a home key, a back key and a menu key, which are provided in the key input unit 110, on one side of the reduced image, and displays a mini mode deactivation key, a movement key and a size adjustment key on the other side of the reduced image. Also, the display panel 132 may display images resulting from the performance of a function corresponding to a preset input event by the user in the mini mode.

The memory 140 stores programs and data necessary for operating the portable device 100. The memory 140 may store start-up programs, at least one operating system and applications. The operating system provides an interface between hardware and applications, and between applications, and administrates a resource of a computer such as a Central Processing Unit (CPU), a Graphics Processing Unit (GPU), a main memory, the memory 140, or the like. The applications are classified to embedded applications and third party applications.

The memory 140 stores an application for performance of the mini mode. Also, the memory 140 stores setup information of the mini mode 141 in the portable device 100. The setup information of the mini mode 141 may include setup information (for instance, a kind of touch gesture requesting the entry /termination of mini mode) for entering the mini mode and termination thereof, and other setup information (for instance, the size, location and transparency of the reduced image) of the mini mode. In addition, the memory 140 stores data necessary for performance of a function and a display in the mini mode, and data related to the input from the touch panel 131 and the key input unit 110.

The control unit 150 controls the general operations of the portable device 100.

The control unit 150 includes at least one CPU. As well known in the art, the CPU is a core control unit of a computer system, which performs calculation and comparison of data, interpretation and performance of instructions, or the like.

The control unit 150 includes a main memory, for example, a Random Access Memory (RAM). The main memory stores all kinds of programs, for example, a start-up program, an operating system and applications, loaded from the memory 140. Also, the control unit 150 includes a cache memory which temporarily stores data to write on the memory 140, and data read from the memory 140.

The control unit 150 identifies an input of a preset event in relation to entering the mini mode, and controls the process of performance of the full mode or the mini mode in response to the preset event. The preset event may be a touch event, a key input, or a motion like shaking or tilting of the portable device 100. Also, the control unit 150 controls the performance of applications in the mini mode, and a conversion of the application performed under the full mode into the mini mode, or vice versa. For example, the control unit 150 controls the display panel 132 in a manner that turning the screen staying vertical in the mini mode to the horizontal position to terminate the mini mode and to thereby display images in the full mode. Also, the control unit 150 controls the display panel 132 to terminate the mini mode and enter the full mode in response to the input of a preset event. The preset event for termination of the mini mode may be the same as the event for entering the mini mode.

The control unit 150 controls the setup of location and size of the reduced image displayed on the screen in the mini mode according to a user's touch event. In addition, when the setup of location and size of the reduced image is changed, the control unit 150 controls the display panel 132 to display the changed reduced image.

The control unit 150 controls various operations in relation to a general function of the portable device 100. For example, the control unit 150 controls the operation of performance of a predetermined application and other functions (for instance, setup of system) and the display of the same. Also, when a communication application is performed in the mini mode, the control unit 150 controls a process related to transmission and reception of data through the wireless communication unit 120.

The sensor unit 160 may include various sensors, for example, geomagnetic sensors, acceleration sensors and gyro-sensors, for detecting a motion input. Here, the geomagnetic sensor, the acceleration sensor and the gyro-sensor detect a motion, i.e., movement and rotation of the portable device, which is generated by the user, and give an output to the control unit 150. More specifically, the gyro-sensor detects directions of six-axes (i.e., X-axis of up and down, Y-axis of left and right, Z-axis of back and forth) and gives an output to the control unit 150. The acceleration sensor detects an acceleration of the portable device 100 to give an output to the control unit 150. The geomagnetic sensor has a role in correcting directional errors of the gyro-sensor and detecting a rotational acceleration by correcting the acceleration sensor. The sensor unit 160 may detect the generation of a preset motion (for instance, tilting, rotation, shaking, etc.) for entering the mini mode or deactivation of the mini mode.

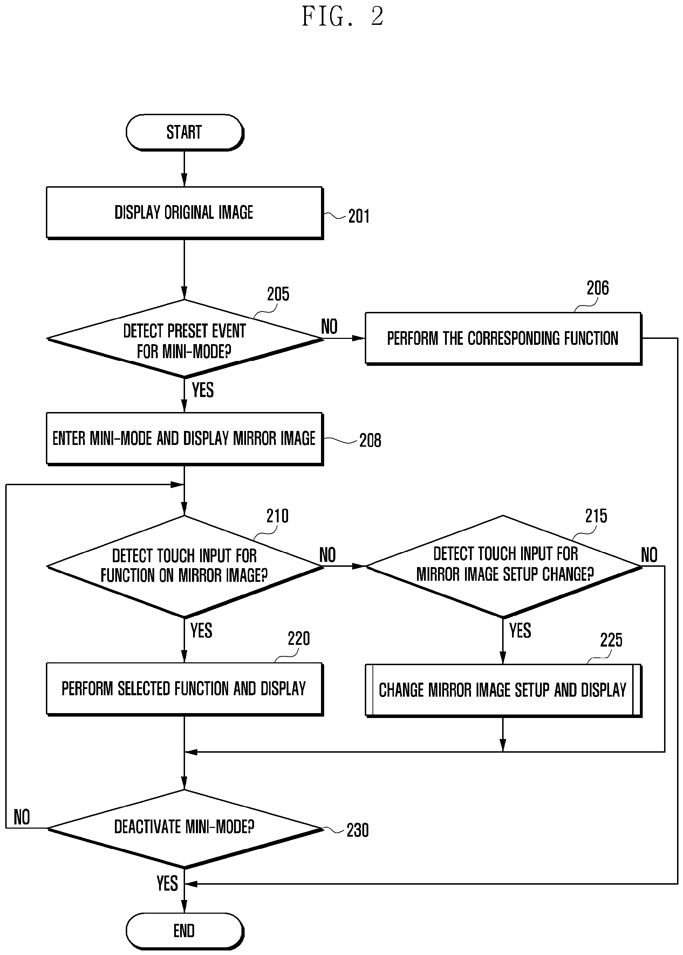

FIG. 2 is a flowchart illustrating a process for performing the mini mode according to an embodiment of the present invention.

Referring to FIG. 2, in step 201, the control unit 150 displays an original image in the full mode on the touch screen unit. After that, the control unit 150 determines whether a preset event for requesting the mini mode is detected in step 205. The preset event for requesting the mini mode may be carried out, for example, by an input of a predetermined key (i.e., a mini mode key) dedicated to perform the mini mode. Alternatively, the preset event for requesting the mini mode may be achieved by a combination of the typical keys (home key + volume key). Also, a touch gesture may be the preset event for requesting the mini mode. In this regard, the touch gesture may be confined to a preset touch gesture (for instance, dragging) which satisfies a predetermined limit in terms of at least one of the movement speed and the movement distance of the touch starting from an edge of the screen, in order to make it different from the normal touch gesture irrelevant to requesting the mini mode. Also, a motion of shaking or tilting the portable device may be used as a preset event dedicated to request the mini mode.

When the event for requesting the mini mode is not detected in step 205, the control unit 150 performs the function corresponding to the key input other than the preset event for requesting the mini mode in step 206. For example, when a volume key input is detected, the control unit 150 carries out the adjustment of volume corresponding to the volume key. On the contrary, when the preset event for requesting the mini mode is detected in step 205, the control unit 150 enters the mini mode and controls the display panel 132 to display a reduced image in step 208. At this time, the reduced image has the same contents as those of the original image in the full mode, but is smaller than the original image.

After the entering the mini mode, the control unit 150 determines whether a touch input on the reduced image for performing a function (for instance, performance of application) is detected in step 210.

When the touch input on the reduced image for performing a function is detected, the control unit 150 performs a function corresponding to the location and item of the touch input to thereby display the results on the touch screen in step 220. The touch may encompass all kinds of touch events, such as a tap, a long touch, a drag, and a scroll, performed in the full mode.

The control unit 150 determines whether the mini mode is to be deactivated in step 230. Deactivation of the mini mode may be implemented by the input of a preset event (for instance, mini mode key input, home key + volume key input) for deactivation of mini mode. Alternatively, the mini mode may be deactivated by selecting a termination icon displayed on one side of the reduced image. When the instruction to deactivate the mini mode is not given, the control unit 150 returns to the step 210 to repeat the process. That is, when the instruction for deactivation of the mini mode is not given, the control unit 150 detects the touch input on the reduced image again and performs the corresponding functions in response to the touch input.

When the touch input on the reduced image for peforming a function is not detected, the control unit 150 determines whether a touch input for changing the setup of reduced image is detected in step 215. When the touch input for changing the setup of the reduced image is detected, the control unit 150 changes the setup of the reduced image and controls the display panel 132 to display the image resulting from the changed setup in step 225. For example, the control unit 150 changes the size or location of the reduced image according to a user's touch input. In addition, the setup items of the reduced image may further include a transparency.

When the touch input for changing the setup of the reduced image is not detected in step 215, or after the step 225, the control unit 150 may determine whether the mini mode is to be deactivated in step 230. The mini mode may be deactivated, for example, by performing the touch gesture for entering into the mini mode again on the reduced image. Alternatively, the mini mode may be deactivated by selecting a termination key located at one side of the reduced image, or by making a motion of shaking or tilting the portable device 100. When an event for deactivation of the mini mode is not detected, the control unit 150 maintains the mini mode. Subsequently, the control unit 150 repeats the process from the step 210. On the other hand, when the event for deactivation of the mini mode is detected, the control unit 150 deactivates the mini mode and terminates the process.

Although not shown in the drawings, the mini mode may be deactivated temporarily to be converted to the full mode. An event for temporary deactivation of the mini mode may be a motion of, for example, turning the device staying vertical to a horizontal position. Also, when predetermined media data, such as a movie and an image, is performed according to a user's setup, the mini mode may be temporarily deactivated. In addition, when the event for temporary deactivation of the mini mode terminates (for instance, when the device having been turned to the horizontal position returns to the original vertical position, or when the performance of the predetermined media data terminates), the full mode may be converted to the mini mode again.

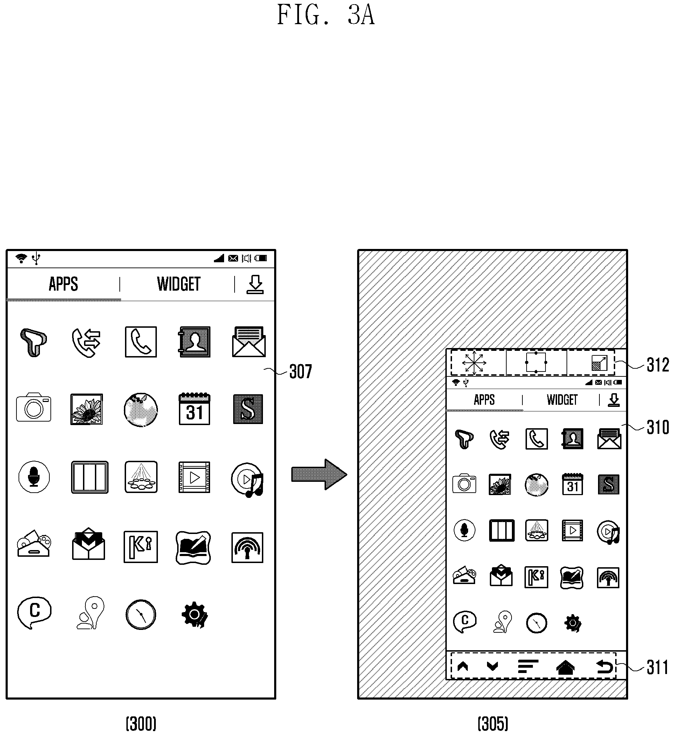

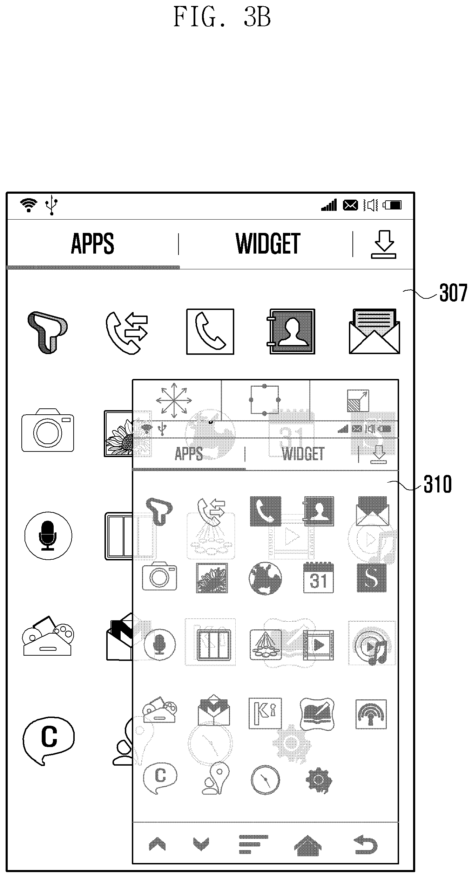

FIGs. 3A and 3B illustrate a reduced image in the mini mode according to an embodiment of the present invention. A picture 300 in FIG. 3A indicates an original image 307 in the full mode. When the preset event for requesting the mini mode in the full mode is detected, the control unit 150 enters the mini mode displaying the reduced image 310 as indicated in a picture 305. At this time, the reduced image 310 is displayed to be opaque on the partial area of the screen not having a background image as shown in the picture 305. Also, outer key icons 311 may be displayed on one side of the reduced image 310. The outer key icons 311 includes, for example, a volume key, a menu key, a home key and a back key, which are displayed in a row from the left to the right as shown in the picture 305. As mentioned above, the outer key icons 311 may be displayed on one side (for instance, at the bottom of the reduced image) of the reduced image 310 in order to facilitate the input of outer function keys by the user under the mini mode. Also, setup change icons 312 for changing the setup of the reduced image 310 are displayed on the upper end of the reduced image 310 as shown in the picture 305. For example, icons, which indicate a movement key for moving the reduced image, a size adjustment key for adjusting the size of the reduced image, and a mini mode deactivation key for deactivating the mini mode, are displayed on one side (for instance, the upper end) of the reduced image 310. However, the setup change icons 312 displayed on one side of the reduced image 310 are not limited to the above, and may further include, for example, an adjustment key for the transparency of the reduced image 310. Although not shown in the drawings, when the reduced image 310 is opaque while the original image 307 is not displayed to be overlaid, predetermined icons may be displayed on the background of the reduced image 310. The predetermined icons may be, for example, icons of applications which are being performed in the background, or icons of applications frequently used by the user.

FIG. 3B illustrates a screen when the original image is overlaid with the translucent reduced image 310. The reduced image 310 may be displayed to be translucent on the screen as shown in FIG. 3B, so that the original image 307 is mirrored in the reduced image 310.

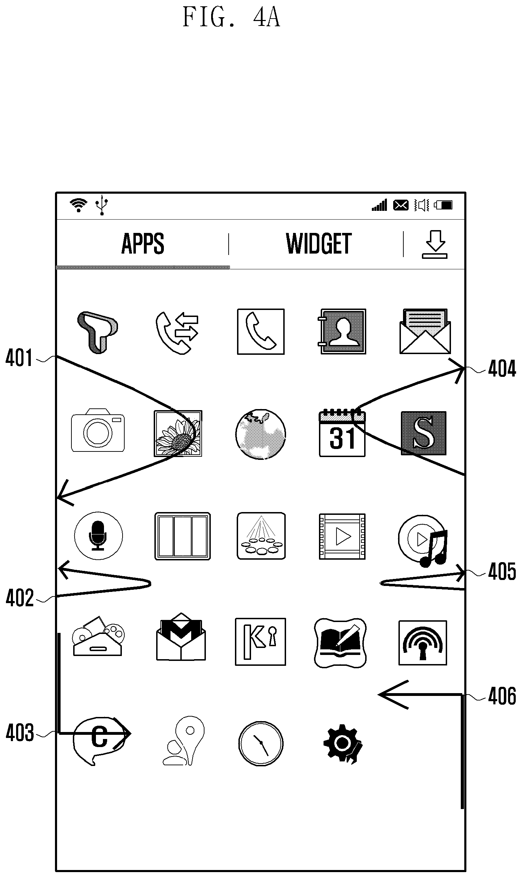

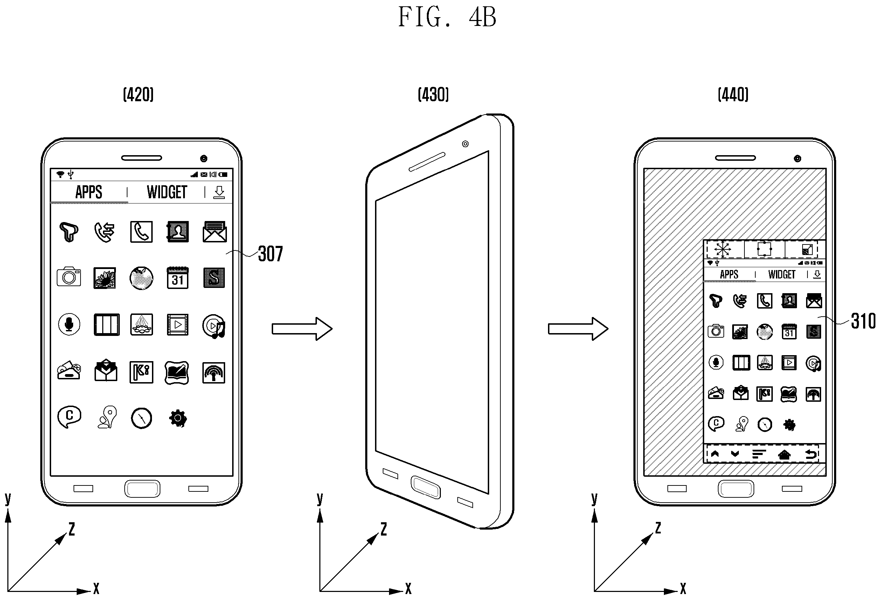

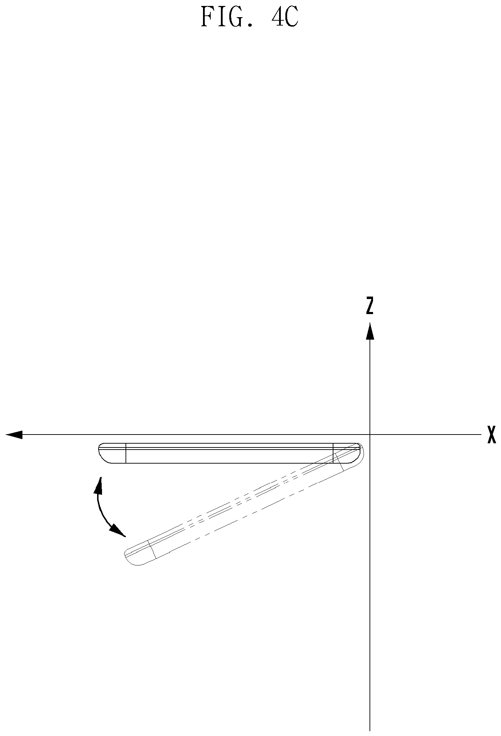

Hereinafter, the event for entering into the mini mode will be described in detail with reference to FIGs. 4A to 4C. FIG. 4A illustrates examples of touch gestures for entering the mini mode according to an embodiment of the present invention. FIGs. 4B and 4C show a motion for entering the mini mode according to an embodiment of the present invention.

At least one of touch gestures for entering the mini mode shown in FIG. 4A may be selected as a touch gesture for entering the mini mode. The touch gesture for entering the mini mode may be confined to a motion of touching the edge of the original image 307 and dragging at a speed higher than a predetermined value, in order to make it different from a touch gesture for performing other functions. Referring to FIG. 4A, the reference numeral 401 indicates a gesture of touching one point of the left edge of the original image 307 and dragging clockwise along a semi-circle. The reference numeral 402 indicates a gesture of touching one point of the left edge, and dragging to the right more than predetermined distance and then returning to the original touch point. The reference numeral 403 indicates a gesture of touching one point of the left edge and dragging downward and then to the right. The reference numeral 404 indicates a gesture of touching one point of the right edge and dragging clockwise along a semi-circle. The reference numeral 405 indicates a gesture of touching one point of the right edge, and dragging to the left more than predetermined distance and then returning to the original touch point. The reference numeral 406 indicates a gesture of touching one point of the right edge and dragging upward and then to the left. All kinds of touch gestures as described above may be selected as a touch gesture for requesting the mini mode. Alternatively, a certain gesture other than the various gestures as shown in FIG. 4A may be a touch gesture for requesting the mini mode.

In addition to the touch gestures, a motion may be adopted as the event for entering the mini mode. The example of the motion is illustrated in FIG. 4B. Here, the z-axis is oriented perpendicular to the screen in FIG. 4B. A picture 420 of FIG. 4B shows a screen of a portable device 100 on which the original image 307 is displayed only. Also, the sensor unit 160 may detect a tilting motion that one side of the portable device 100 tilts toward the ground as shown in a picture 430. The control unit 150 determines to enter the mini mode by the preset motion as above, and the preset motion may further include, for example, a shaking (for instance, shaking of the portable device). Also, as a result of the tilting motion, the control unit 150 determines to enter the mini mode to thereby allow the reduced image to be displayed on the partial area of the screen as shown in a picture 440.

FIG. 4C illustrates a portable device 100 viewed from the side with a screen facing upward in order to additionally describe a tilting motion of the portable device. Provided that the x-axis is initially parallel to the screen (and may, for instance, be parallel to the ground) and the z-axis is initially perpendicular to the screen (and may, for instance be perpendicular to the ground), the portable device 100 of FIG. 4C makes a motion of tilting one side thereof toward the ground and then returning to the original position. When the sensor unit 160 detects such a motion of the portable device 100, the control unit 150 enters the mini mode. However, the preset motion for entering the mini mode is not limited to the tilting motion, but may further include a shaking motion (for instance, shaking the portable device).

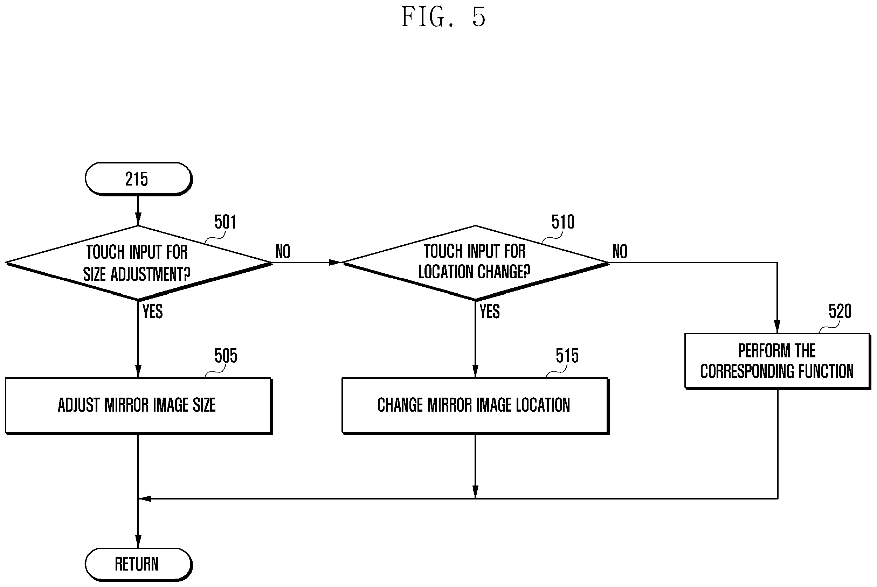

FIG. 5 is a flowchart illustrating a detailed process of changing a setup of the reduced image according to an embodiment of the present invention. FIG. 5 also illustrates the step 225 in FIG. 2 in more detail.

After the step 215 of FIG. 2, the control unit 150 determines whether the touch input is for adjusting the size of the reduced image 310 in step 501. The touch input for adjustment of size may be implemented in a manner of, for example, touching the corner point of the reduced image 310 and dragging along a diagonal line to thereby adjust the size of the reduced image 310. Alternatively, when a size adjustment key displayed on one side of the reduced image 310 is selected, the control unit 150 adjusts the size of the reduced image 310 to display. When the selection of the size adjustment key displayed on one side of the reduced image 310 is confirmed, the control unit 150 performs a size adjustment mode. In the size adjustment mode, the control unit 150 displays an image adjustment box on the border of the reduced image 310. Also, the user may select one of adjustment points displayed on the image adjustment box and perform a touch gesture (for instance, dragging) in the direction of reduction/enlargement. When it is determined that the touch input is for adjustment of the size of the reduced image 310, the control unit 150 adjusts the size of the reduced image 310 and displays the resized reduced image on the screen in step 505.

On the contrary, if it is determined that the touch input is not for the adjustment of size of the reduced image 310, the control unit 150 determines whether the touch input is for the movement of the reduced image 310 in step 510. The touch input for movement of the reduced image 310 may be achieved by, for example, touching (or long-touching) a movement key displayed on one side of the reduced image 310, or touching (or long-touching) the border area of the reduced image 310. When it is determined that the touch input is for movement of the reduced image 310, the control unit 150 changes the location of the reduced image 310 to thereby display the relocated reduced image in step 515. When the touch input (for instance, a touch input on the predetermined area and a movement gesture) for movement is confirmed, the control unit 150 may perform a movement mode. The user may be informed the activation of the movement mode using a specific means (for instance, oscillation mode) upon entering the mini mode. Also, the control unit 150 may control the display panel 132 to move the reduced image 310 in response to user's touch input and gesture to thereby display the same in the movement mode. After that, the control unit 150 may terminate the step 225 of FIG. 2.

When it is determined that the touch input is not for movement of the reduced image 310, the control unit 150 performs a function corresponding to the touch input in step 520. For example, it may be performed to change the setup like adjustment of transparency of the reduced image 310 in step 520.

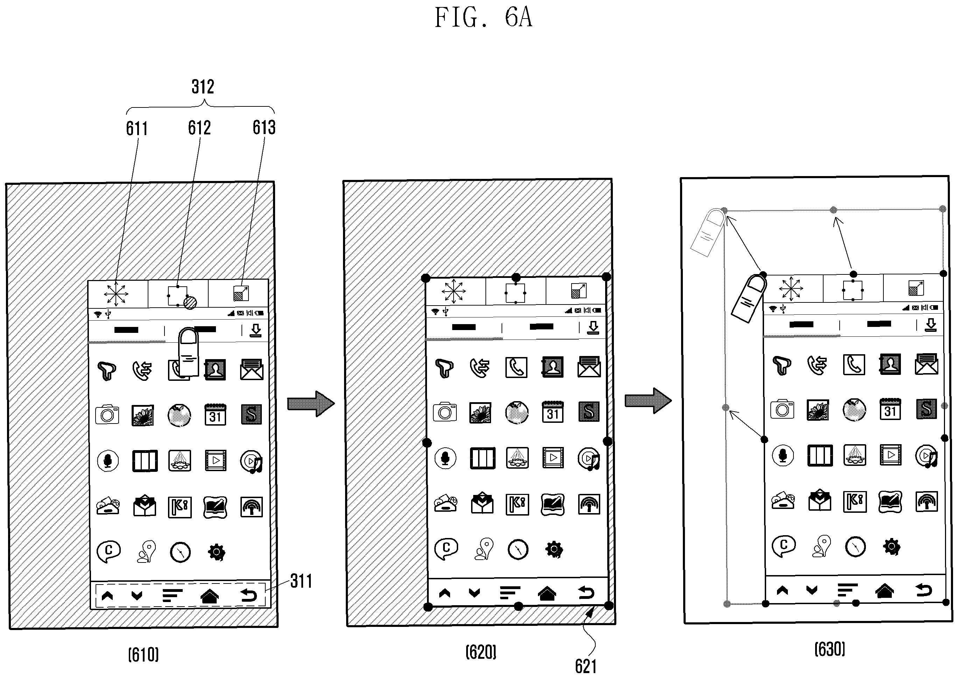

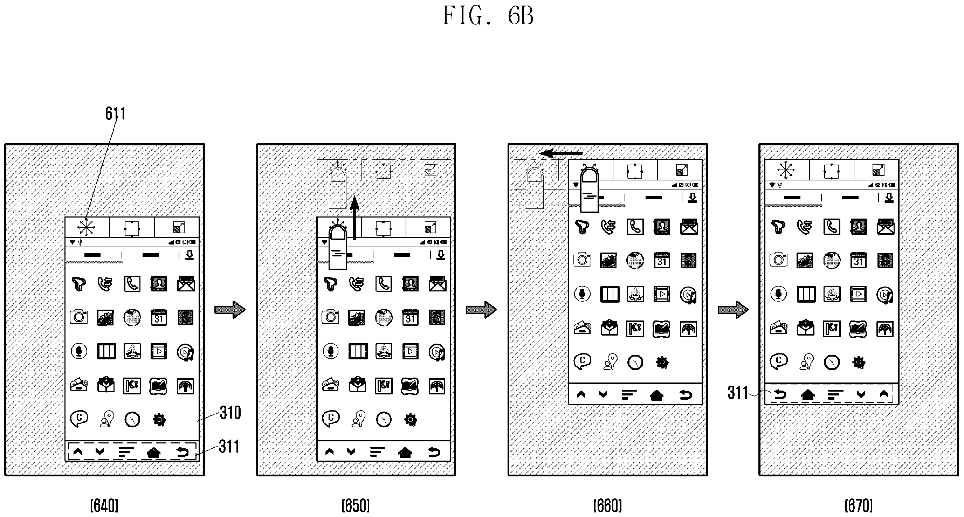

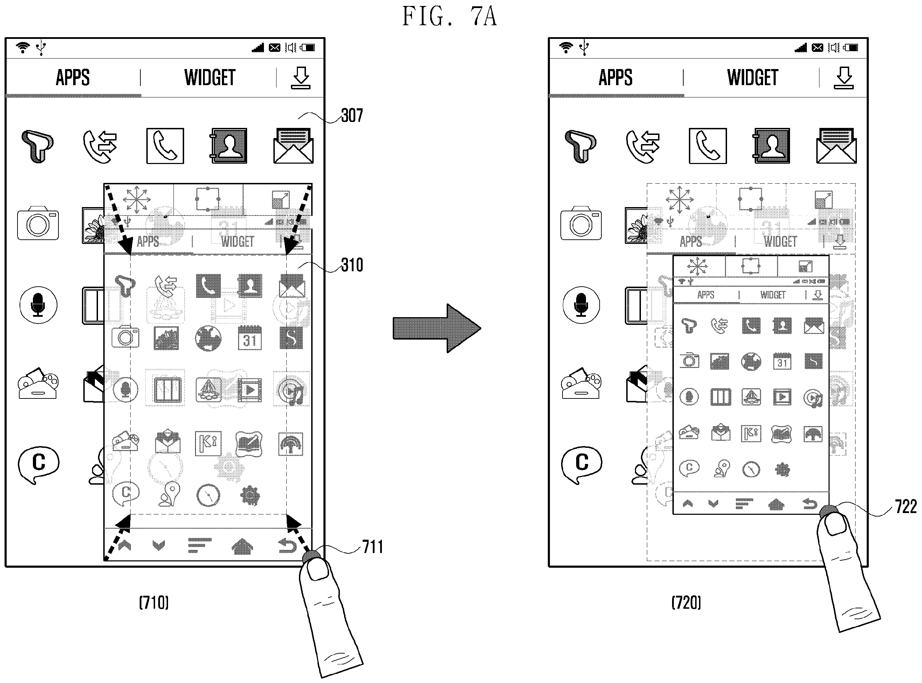

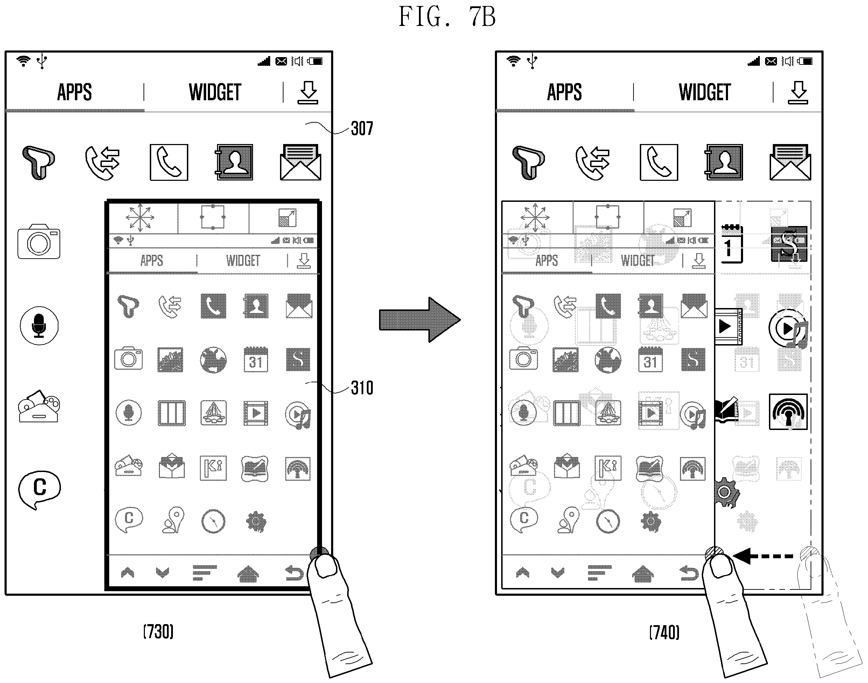

The change of setup such as the size and location of the reduced image 310 will be described in detail with reference to FIGs. 6A to 6B and 7A to 7B. FIGs. 6A and 6B illustrate the change of setup of an opaque reduced image according to an embodiment of the present invention. FIGs. 7A and 7B illustrate the change of setup of a translucent reduced image according to an embodiment of the present invention. Here, the procedure of changing the setup of the reduced image, as described below, may not be related to the transparency of the reduced image. That is, the change of setup of the opaque reduced image may follow the procedure shown in FIGs. 7A and 7B.

A picture 610 of FIG. 6A shows a screen on which the reduced image 310 is displayed in the mini mode of the portable device 100. The reduced image 310, which is opaque, is displayed together with a dark background image. Also, the outer key icons 311 and the setup change icons 312 are displayed at the bottom portion and the upper portion of the reduced image 310, respectively. The setup change icons 312 includes a movement key 611 for changing the location of the reduced image 310, a size adjustment key 612 for adjusting the size of the reduced image 310, and a mini mode deactivation key 613 for deactivating the mini modes and allowing the original image only to be displayed. When the size adjustment key 612 is selected in the picture 610, an image adjustment box 621 is displayed on the border of the reduced image 310 as shown in a picture 620. The image adjustment box may be provided with adjustment points for adjusting the size of the image at the center of each line and the corners. A picture 630 illustrates that the reduced image 310 is being enlarged by selecting one of the adjustment points displayed on the image adjustment box 621. The user may change the size of the reduced image 310 by adjusting the size of the image adjustment box 621 as above. In the same way, the user may reduce the size of the reduced image 310 by reducing the size of the image adjustment box 621.

FIG. 6B illustrates the change of location of the reduced image. A picture 640 shows the reduced image 310 located at the lower right corner on the screen. Also, the movement key 611 is displayed on the upper leftmost portion of the reduced image 310. A picture 650 of FIG. 6B illustrates a user's gesture of selecting the movement key 611 and moving toward the upper end of the screen. When the touch on the movement key 611 is detected and the touch continues to move in a predetermined direction, the control unit 150 may change the location of the reduced image 310 to be thereby displayed as shown in a picture 660. Also, the picture 660 shows that the user is moving the finger touching the movement key 611 to the left of the screen. In this case, the reduced image 310 may be moved and displayed at the upper left corner according to the movement of user's touch as shown in a picture 670. At this time, the outer key icons 311 displayed at the bottom of the reduced image 310 may be rearranged in order according to the location (for instance, the left and right of the screen) of the reduced image 310. The outer key icons 311 may be rearranged in a manner that the menu key, the home key and the back key, which are frequently used, are positioned to be close to user's hand. That is, when the reduced image 310 is located on the right of the screen as in the pictures 640 to 660, the outer key icons 311 may be displayed in order that the volume key, the menu key, the home key and the back key are positioned one by one from the left to the right. Contrarily, when the reduced image 310 is located on the left of the screen as in the picture 670, the outer key icons 311 may be displayed in order that the back key, the home key, the menu key and the volume key are positioned one by one from the left to the right.

FIG. 7A illustrates a screen where the original image 307 is overlaid with a translucent reduced image 310. In this way, the reduced image 310 is displayed to overlay the original image 307. A picture 710 of FIG. 7A shows a user's gesture of touching a corner point 711 and dragging. When a user's touch input on the reduced image 310 for reduction of size is input, the reduced image 310 is displayed in a reduced size. The touch gesture for reducing the size of the reduced image 310 is implemented by touching the corner point 711 of the original reduced image 310 and dragging along a diagonal line of the reduced image 310 toward the center of the screen. Also, the reduced size of the reduced image 310 is fixed by removing the user's touch. Here, the reduced image 310 is reduced in size to be proportional to the distance between the original corner point 711 and the moved corner point 722.

The reduced image 310 may be enlarged by touching and dragging the corner point of the reduced image 310 like the reduction of the reduced image 310. Also, the touch gesture for enlargement may be implemented by touching the corner point of the reduced image 310 and dragging along a diagonal line of the reduced image 310 in a direction opposite to the center of the screen. The enlarged size of the reduced image 310 may be fixed by removing the user's touch.

FIG. 7B illustrates a screen where the original image 307 is overlaid with the translucent reduced image 310. In this way, the reduced image 310 is displayed to overlay the original image 307. When a user's touch on the reduced image 310 for movement is input as shown in a picture 730 of FIG. 7B, the reduced image 310 is relocated to be thereby displayed as shown in picture 740. The touch gesture for movement of the reduced image 310 may be, for example, a drag. The touch gesture of dragging for movement of the reduced image 310 may be confined to gestures generated on the border 731 of the reduced image 310, in order to make it different from the touch gesture (for instance, a drag that induces the movement of screen) for performing general functions on the reduced image 310. The touch gesture for movement of the reduced image 310 may be implemented by touching the border 731 of the reduced image and then dragging in the direction to which the reduced image 310 is to be moved. Referring to a picture 740 of FIG. 7B, the user touches the border of the reduced image 310 located at the right side, and drags it to the left, so that the reduced image 310 is relocated to the left corner. Also, the relocated reduced image 310 is fixed by removing the user's touch.

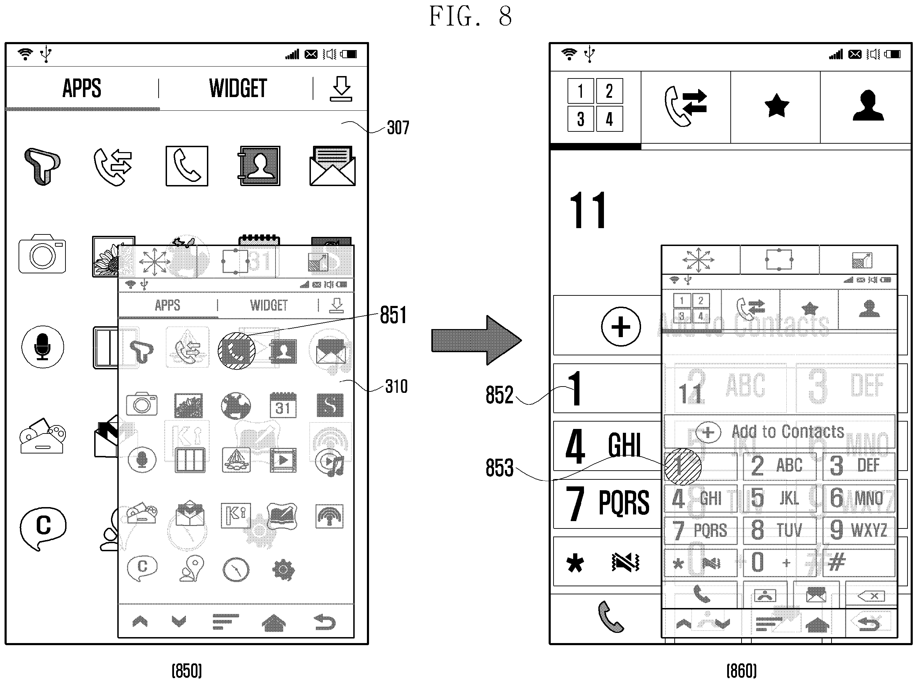

FIG. 8 illustrates performing a function in the mini mode according to an embodiment of the present invention.

A picture 850 of FIG. 8 shows that the translucent reduced image 310 is displayed on the partial area of a touch screen in the mini mode. The reduced image 310 has the same arrangement of applications and widgets as those of the original image 307 to facilitate a user's touch input. When a certain application icon on the reduced image 310 is touched, the control unit 150 may identify the selection of the application. In the picture 850, the control unit 150 identifies that a phone application icon 851 has been selected by the user's input. In this case, both the original image 307 and the reduced image 310 display the same result of performance of the phone application as shown in a picture 860 of FIG. 8. It will be appreciated that alternatively only one of the original image 307 and the reduced image 310 may display the result of performance of the selected application, for instance only the reduced image 310. In addition to the performance of an application, the input of letters, numbers and symbols of the performed application may be achieved by a touch input on the reduced image 310. When the phone application is performed as shown in the picture 860, the control unit 150 may display a reduced dial pad on the reduced image 310. Also, the control unit 150 may detect a dial input upon a user's touch on the reduced dial pad of the reduced image 310, and may display the dialed number in a display field of the original image 301 and the reduced image 310. For example, when the user touches a number "1" as indicated by reference numeral 853 on the reduced image 310 of the picture 860, the control unit 150 displays the number "1" in the display field, as if the number "1" of the original image is touched. Selecting and performing the phone application in the reduced image 310 has been described with reference to the drawings here. However, it should be understood that the functions performed in the reduced image 310 may include various examples such as termination of an application, a change in location of icons, a movement of a screen, etc., as well as performing applications.

Although the method and the apparatus for managing the audio data of the electronic device according to the embodiments of the present invention have been described through the specification and drawings by using the specific terms, the embodiments and the terms are merely used as general meanings to easily describe technical contents of the present invention and assist understanding of the present invention, and the present invention is not limited to the embodiments. That is, it is apparent to those skilled in the art that other various embodiments based on the technical idea of the present invention can be implemented.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

It will be appreciated from the following description that, in certain embodiments of the invention, features concerning the graphic design of user interfaces are combined with interaction steps or means to achieve a technical effect.

It will be appreciated from the following description that, in certain embodiments of the invention, graphic features concerning technical information (for instance internal machine states) are utilised to achieve a technical effect.

Certain embodiments aim to achieve the technical effect of enhancing the precision of an input device.

Certain embodiments aim to achieve the technical effect of lowering a burden (for instance a cognitive, operative, operational, operating, or manipulative burden) of a user when performing certain computer or device interactions.

Certain embodiments aim to achieve the technical effect of providing a more efficient man-machine (user-machine) interface.

While the present invention has been particularly shown and described with reference to certain embodiments thereof, various changes in form and detail may be made therein without departing from the scope of the present invention as defined by the following claims.

## Claims

1. A method for a portable device (100) having a touch screen display (130), the method comprising:
displaying (201), in full mode, an original image (307) on the whole of the touch screen display (130), the original image (307) comprising one or more application icons;
entering, in response to detecting a preset input event, a mini-mode in which a reduced size image (310) of the original image (307) is displayed on a partial area of the touch screen (130), the reduced size image (310) having reduced size versions of the one or more application icons in the same arrangement as the original image (307), and when an application icon of the reduced size image (310) is selected by a user touch, a corresponding application is executed;
**characterized in that**:
a plurality of further icons (311) are displayed at the bottom of one side of the reduced size image (310) when in the mini-mode, the plurality of further icons (311) being displayed in a first order from left to right when the reduced size image (310) is located on the left of the touch screen (130), and the plurality of further icons (311) being displayed in a second order from left to right when the reduced size image (310) is located on the right of the touch screen (130), wherein the first order is the reverse of the second order.

2. The method of claim 1, further comprising, if the portable device (100) is in a vertical position when the mini-mode is entered, in response to the portable device (100) being turned from the vertical position to a horizontal position while in the mini-mode, deactivating the mini-mode and entering the full-mode.

3. The method of claim 2, further comprising, if the portable device (100) is returned to the vertical position from the horizontal position, re-entering the mini-mode.

4. The method of claim 1, further comprising temporarily deactivating the mini-mode and entering the full-mode when an input event for temporarily deactivating the mini-mode is detected.

5. The method of claim 4, wherein the input event for temporarily deactivating the mini-mode includes reproducing a predetermined type of media data.

6. The method of claim 5, wherein the mini-mode is re-entered when the reproduction of the predetermined type of media data terminates.

7. The method of claim 4, wherein the input event for temporarily deactivating the mini-mode includes a predetermined motion of the portable device (100).

8. The method of any preceding claim, wherein the input event for entering the mini-mode comprises a preset dragging touch gesture performed in a vicinity of an edge of the original image (307) and which satisfies a determined movement speed limit.

9. The method of any preceding claim, wherein, when an input event for changing the size of the reduced size image (310) is detected (501), allowing the reduced size image (310) to be changeable in size by an input event subsequent to the input event for changing the size (505).

10. The method of claim 9, wherein the input event for changing the size of the reduced size image (310) comprises at least one of an input for selecting a size adjustment button outside of the reduced size image (310) and an input for selecting one or more corner points of the reduced size image (310).

11. The method of any preceding claim, further comprising:
when an input event for changing the location of the mini-mode screen (310) is detected (510), allowing the mini-mode screen (310) to be movable around the touch-screen by an input subsequent to the input event for changing the location.

12. The method of claim 1, wherein the touch input for changing the location of the reduced size image (310) comprises a touch input selecting a movement key outside of the mini-mode screen (310).

13. The method of any preceding claim, wherein, while the reduced size image (310) is displayed on the touch screen display (130), the portions of the touch screen display (130) not displaying the reduced size image (310) and the plurality of further icons (311) are blank.

14. The method of any preceding claim, wherein the input event for selecting the reduced size version of the application icon on the reduced size image (310) comprises a touch event.

15. The method of any preceding claim, wherein the function corresponding to the one or more application icons, or to their respective one or more reduced size versions of the application icons, comprises at least one of terminating an application and performing an application.

16. A portable device (100), comprising:
a touch screen display (130); and
a control unit (150) configured to
display, in full mode, an original image (307) on the whole of the touch screen display (130), the original image (307) comprising one or more application icons,
control to enter, in response to detecting a preset input event, a mini-mode in which a reduced size image (310) of the original image (307) is displayed on a partial area of the touch screen (130), the reduced size image (310) having reduced size versions of the one or more application icons in the same arrangement as the original image (307), and when an application icon of the reduced size image (310) is selected by a user touch, a corresponding application is executed, and
**characterized in that**:
a plurality of further icons (311) are displayed at the bottom of one side of the reduced size image (310) when in the mini-mode, the plurality of further icons (311) being displayed in a first order from left to right when the reduced size image (310) is located on the left of the touch screen (130), and the plurality of further icons (311) being displayed in a second order from left to right when the reduced size image (310) is located on the right of the touch screen (130), wherein the first order is the reverse of the second order.

17. The portable device (100) of claim 16, wherein the control unit is further configured to execute the method of any of claims 2 to 15.

18. A computer readable recording medium have stored thereon instructions arranged to, when executed by the portable device of claim 16, implement the method of any of claims 1 to 15.

## Patentansprüche

1. Verfahren für eine tragbare Vorrichtung (100), die eine Berührungsbildschirmanzeige (130) aufweist, wobei das Verfahren Folgendes umfasst:
Anzeigen (201), im Vollmodus, eines Originalbildes (307) auf der gesamten Berührungsbildschirmanzeige (130), wobei das Originalbild (307) ein oder mehrere Anwendungssymbole umfasst;
Eintreten, als Reaktion auf das Erfassen eines voreingestellten Eingabeereignisses, in einen Minimodus, in dem ein verkleinertes Bild (310) des Originalbildes (307) auf einem Teilbereich des Berührungsbildschirms (130) angezeigt wird, wobei das verkleinerte Bild (310) verkleinerte Versionen des einen oder der mehreren Anwendungssymbole in der gleichen Anordnung wie das Originalbild (307) aufweist, und wenn ein Anwendungssymbol des verkleinerten Bildes (310) durch eine Benutzerberührung ausgewählt wird, eine entsprechende Anwendung ausgeführt wird;
**dadurch gekennzeichnet, dass**:
eine Vielzahl von weiteren Symbolen (311) unten auf einer Seite des verkleinerten Bildes (310) angezeigt wird, wenn im Minimodus, wobei die Vielzahl von weiteren Symbolen (311) in einer ersten Reihenfolge von links nach rechts angezeigt wird, wenn sich das verkleinerte Bild (310) auf der linken Seite des Berührungsbildschirms (130) befindet, und die Vielzahl von weiteren Symbolen (311) in einer zweiten Reihenfolge von links nach rechts angezeigt wird, wenn sich das verkleinerte Bild (310) auf der rechten Seite des Berührungsbildschirms (130) befindet, wobei die erste Reihenfolge die Umkehrung der zweiten Reihenfolge ist.

2. Verfahren nach Anspruch 1, ferner umfassend, wenn die tragbare Vorrichtung (100) in einer vertikalen Position ist, wenn in den Minimodus eingetreten wird, als Reaktion darauf, dass die tragbare Vorrichtung (100) von der vertikalen Position in eine horizontale Position gedreht wird, während im Minimodus, Deaktivieren des Minimodus und Eintreten in den Vollmodus.

3. Verfahren nach Anspruch 2, ferner umfassend, wenn die tragbare Vorrichtung (100) von der horizontalen Position in die vertikale Position zurückgebracht wird, erneutes Eintreten in den Minimodus.

4. Verfahren nach Anspruch 1, ferner umfassend vorübergehendes Deaktivieren des Minimodus und Eintreten in den Vollmodus, wenn ein Eingabeereignis zum vorübergehenden Deaktivieren des Minimodus erfasst wird.

5. Verfahren nach Anspruch 4, wobei das Eingabeereignis zum vorübergehenden Deaktivieren des Minimodus Wiedergeben eines vorbestimmten Typs von Mediendaten beinhaltet.

6. Verfahren nach Anspruch 5, wobei in den Minimodus erneut eingetreten wird, wenn die Wiedergabe des vorbestimmten Typs von Mediendaten endet.

7. Verfahren nach Anspruch 4, wobei das Eingabeereignis zum vorübergehenden Deaktivieren des Minimodus eine vorbestimmte Bewegung der tragbaren Vorrichtung (100) beinhaltet.

8. Verfahren nach einem vorhergehenden Anspruch, wobei das Eingabeereignis zum Eintreten in den Minimodus eine voreingestellte Ziehberührungsgeste umfasst, die in einer Nähe einer Kante des Originalbildes (307) durchgeführt wird und die eine bestimmte Bewegungsgeschwindigkeitsgrenze erfüllt.

9. Verfahren nach einem vorhergehenden Anspruch, wobei, wenn ein Eingabeereignis zum Ändern der Größe des verkleinerten Bildes (310) erfasst (501) wird, ermöglicht wird, dass das verkleinerte Bild (310) durch ein Eingabeereignis anschließend an das Eingabeereignis zum Ändern der Größe (505) in der Größe änderbar ist.

10. Verfahren nach Anspruch 9, wobei das Eingabeereignis zum Ändern der Größe des verkleinerten Bildes (310) zumindest eines von einer Eingabe zum Auswählen einer Größenanpassungsschaltfläche außerhalb des verkleinerten Bildes (310) und einer Eingabe zum Auswählen von einem oder mehreren Eckpunkten des verkleinerten Bildes (310) umfasst.

11. Verfahren nach einem vorhergehenden Anspruch, ferner umfassend:
wenn ein Eingabeereignis zum Ändern der Stelle des Minimodus-Bildschirms (310) erfasst (510) wird, Ermöglichen, dass der Minimodus-Bildschirm (310) um den Berührungsbildschirm durch eine Eingabe anschließend an das Eingabeereignis zum Ändern der Stelle bewegbar ist.

12. Verfahren nach Anspruch 1, wobei die Berührungseingabe zum Ändern der Stelle des verkleinerten Bildes (310) eine Berührungseingabe umfasst, die eine Bewegungstaste außerhalb des Minimodus-Bildschirms (310) auswählt.

13. Verfahren nach einem vorhergehenden Anspruch, wobei, während das verkleinerte Bild (310) auf der Berührungsbildschirmanzeige (130) angezeigt wird, die Abschnitte der Berührungsbildschirmanzeige (130), die das verkleinerte Bild (310) nicht anzeigen, und die Vielzahl von weiteren Symbolen (311) leer sind.

14. Verfahren nach einem vorhergehenden Anspruch, wobei das Eingabeereignis zum Auswählen der verkleinerten Version des Anwendungssymbols auf dem verkleinerten Bild (310) ein Berührungsereignis umfasst.

15. Verfahren nach einem vorhergehenden Anspruch, wobei die Funktion, die dem einen oder den mehreren Anwendungssymbolen oder ihren jeweiligen einen oder mehreren verkleinerten Versionen der Anwendungssymbole entspricht, zumindest eines von Beenden einer Anwendung und Durchführen einer Anwendung umfasst.

16. Tragbare Vorrichtung (100), umfassend:
eine Berührungsbildschirmanzeige (130); und
eine Steuereinheit (150), die für Folgendes konfiguriert ist:
Anzeigen, im Vollmodus, eines Originalbildes (307) auf der gesamten Berührungsbildschirmanzeige (130), wobei das Originalbild (307) ein oder mehrere Anwendungssymbole umfasst,
Steuern, um als Reaktion auf das Erfassen eines voreingestellten Eingabeereignisses in einen Minimodus einzutreten, in dem ein verkleinertes Bild (310) des Originalbildes (307) auf einem Teilbereich des Berührungsbildschirms (130) angezeigt wird, wobei das verkleinerte Bild (310) verkleinerte Versionen des einen oder der mehreren Anwendungssymbole in der gleichen Anordnung wie das Originalbild (307) aufweist, und wenn ein Anwendungssymbol des verkleinerten Bildes (310) durch eine Benutzerberührung ausgewählt wird, eine entsprechende Anwendung ausgeführt wird, und
**dadurch gekennzeichnet, dass**:
eine Vielzahl von weiteren Symbolen (311) unten auf einer Seite des verkleinerten Bildes (310) angezeigt wird, wenn im Minimodus, wobei die Vielzahl von weiteren Symbolen (311) in einer ersten Reihenfolge von links nach rechts angezeigt wird, wenn sich das verkleinerte Bild (310) auf der linken Seite des Berührungsbildschirms (130) befindet, und die Vielzahl von weiteren Symbolen (311) in einer zweiten Reihenfolge von links nach rechts angezeigt wird, wenn sich das verkleinerte Bild (310) auf der rechten Seite des Berührungsbildschirms (130) befindet, wobei die erste Reihenfolge die Umkehrung der zweiten Reihenfolge ist.

17. Tragbare Vorrichtung (100) nach Anspruch 16, wobei die Steuereinheit ferner konfiguriert ist, um das Verfahren nach einem der Ansprüche 2 bis 15 auszuführen.

18. Computerlesbares Aufzeichnungsmedium, auf dem Anweisungen gespeichert sind, die angeordnet sind, um, wenn sie durch die tragbare Vorrichtung nach Anspruch 16 ausgeführt werden, das Verfahren nach einem der Ansprüche 1 bis 15 zu implementieren.

## Revendications

1. Procédé pour un dispositif portable (100) possédant un dispositif d'affichage à écran tactile (130), le procédé comprenant :
l'affichage (201), en mode plein, d'une image d'origine (307) sur l'ensemble du dispositif d'affichage à écran tactile (130), l'image d'origine (307) comprenant une ou plusieurs icônes d'application ;
l'entrée, en réponse à la détection d'un événement d'entrée prédéfini, dans un mini-mode dans lequel une image de taille réduite (310) de l'image d'origine (307) est affichée sur une zone partielle de l'écran tactile (130), l'image de taille réduite (310) possédant des versions de taille réduite de la ou des icônes d'application dans le même agencement que l'image d'origine (307), et
lorsqu'une icône d'application de l'image de taille réduite (310) est choisie par un toucher de l'utilisateur, une application correspondante est exécutée ;
**caractérisé en ce que** :
une pluralité d'icônes supplémentaires (311) sont affichées en bas d'un côté de l'image de taille réduite (310) lorsqu'elle est en mini-mode, la pluralité d'icônes supplémentaires (311) étant affichées dans un premier ordre de gauche à droite lorsque l'image de taille réduite (310) est située sur la gauche de l'écran tactile (130), et ladite pluralité d'icônes supplémentaires (311) étant affichées dans un second ordre de gauche à droite lorsque l'image de taille réduite (310) est située sur à droite de l'écran tactile (130), ledit premier ordre étant l'inverse du second ordre.

2. Procédé selon la revendication 1, comprenant en outre, si le dispositif portable (100) est dans une position verticale lorsque le mini-mode est entré, en réponse à la rotation du dispositif portable (100) de la position verticale à une position horizontale alors qu'il est dans le mini-mode, la désactivation du mini-mode et l'entrée dans le mode plein.

3. Procédé selon la revendication 2, comprenant en outre, si le dispositif portable (100) est ramené à la position verticale à partir de la position horizontale, l'entrée de nouveau dans le mini-mode.

4. Procédé selon la revendication 1, comprenant en outre la désactivation temporaire du mini-mode et l'entrée dans le mode plein lorsqu'un événement d'entrée pour désactiver temporairement le mini-mode est détecté.

5. Procédé selon la revendication 4, ledit événement d'entrée destiné à désactiver temporairement le mini-mode comprenant la reproduction d'un type préétabli de données multimédias.

6. Procédé selon la revendication 5, le mini-mode étant entré de nouveau lorsque la reproduction du type préétabli de données multimédias prend fin.

7. Procédé selon la revendication 4, ledit événement d'entrée pour désactiver temporairement le mini-mode comprenant un mouvement préétabli du dispositif portable (100).

8. Procédé selon une quelconque revendication précédente, ledit événement d'entrée pour entrer dans le mini-mode comprenant un geste tactile de glissement prédéfini réalisé au voisinage d'un bord de l'image d'origine (307) et qui satisfait une limite de vitesse de déplacement déterminée.

9. Procédé selon une quelconque revendication précédente, lorsqu'un événement d'entrée pour modifier la taille de l'image de taille réduite (310) est détecté (501), permettant à l'image de taille réduite (310) de pouvoir être modifiée en taille par un événement d'entrée consécutif à l'événement d'entrée pour modifier la taille (505).

10. Procédé selon la revendication 9, ledit événement d'entrée pour modifier la taille de l'image de taille réduite (310) comprenant au moins l'une d'une entrée pour choisir un bouton de réglage de taille à l'extérieur de l'image de taille réduite (310) et d'une entrée pour choisir un ou plusieurs points d'angle de l'image de taille réduite (310).

11. Procédé selon une quelconque revendication précédente, comprenant en outre :
lorsqu'un événement d'entrée pour changer l'emplacement de l'écran en mini-mode (310) est détecté (510), ladite permission à l'écran en mini-mode (310) d'être mobile autour de l'écran tactile par une entrée consécutive à l'événement d'entrée pour modifier l'emplacement.

12. Procédé selon la revendication 1, ladite entrée tactile pour changer l'emplacement de l'image de taille réduite (310) comprenant une entrée tactile choisissant une touche de mouvement à l'extérieur de l'écran en mini-mode (310).

13. Procédé selon une quelconque revendication précédente, pendant que l'image de taille réduite (310) est affichée sur le dispositif d'affichage à écran tactile (130), lesdites parties du dispositif d'affichage à écran tactile (130) n'affichant pas l'image de taille réduite (310) et ladite pluralité d'icônes supplémentaires (311) étant vierges.

14. Procédé selon une quelconque revendication précédente, ledit événement d'entrée pour choisir la version de taille réduite de l'icône d'application sur l'image de taille réduite (310) comprenant un événement tactile.

15. Procédé selon une quelconque revendication précédente, ladite fonction correspondant à la ou les icônes d'application, ou à leur ou leurs versions de taille réduite respectives des icônes d'application, comprenant au moins l'une de l'arrêt de l'application et de la réalisation d'une application.

16. Dispositif portable (100) comprenant :
un dispositif d'affichage à écran tactile (130) ; et
une unité de commande (150) configurée pour afficher, en mode plein, une image d'origine (307) sur l'ensemble du dispositif d'affichage à écran tactile (130), l'image d'origine (307) comprenant une ou plusieurs icônes d'application,
commander d'entrer, en réponse à la détection d'un événement d'entrée prédéfini, un mini-mode dans lequel une image de taille réduite (310) de l'image d'origine (307) est affichée sur une zone partielle de l'écran tactile (130), l'image de taille réduite (310) possédant des versions de taille réduite de la ou des icônes d'application dans le même agencement que l'image d'origine (307), et
lorsqu'une icône d'application de l'image de taille réduite (310) est choisie par un toucher de l'utilisateur, une application correspondante est exécutée, et
**caractérisé en ce que** :
une pluralité d'icônes supplémentaires (311) sont affichées en bas
d'un côté de l'image de taille réduite (310) lorsqu'elle est dans le mini-mode, la pluralité d'icônes supplémentaires (311) étant affichées dans un premier ordre de gauche à droite lorsque l'image de taille réduite (310) est située à gauche de l'écran tactile (130), et la pluralité d'icônes supplémentaires (311) étant affichées dans un second ordre de gauche à droite lorsque l'image de taille réduite (310) est située à droite de l'écran tactile (130), ledit premier ordre étant l'inverse du second ordre.

17. Dispositif portable (100) selon la revendication 16, ladite unité de commande étant en outre configurée pour exécuter le procédé selon l'une quelconque des revendications 2 à 15.

18. Support d'enregistrement lisible par ordinateur sur lequel sont stockées des instructions agencées pour, lorsqu'elles sont exécutées par le dispositif portable selon la revendication 16, mettre en œuvre le procédé selon l'une quelconque des revendications 1 à 15.
